Europäisches Patentamt

European Patent Office

Office européen des brevets

(11) Numéro de publication: **0 380 432**
**A2**

## (12) DEMANDE DE BREVET EUROPEEN

(21) Numéro de dépôt: **90420035.9**

(51) Int. Cl.5: **G05B 19/42**

(22) Date de dépôt: **23.01.90**

(30) Priorité: **23.01.89 FR 8901309**

(43) Date de publication de la demande:
**01.08.90 Bulletin 90/31**

(84) Etats contractants désignés:
**AT BE CH DE DK ES FR GB GR IT LI LU NL SE**

(71) Demandeur: **VISION NUMERIC**
**Pépinière Axone de Saint Clément, Saint**
**Clément les Places**
**F-69930 Saint Laurent de Chamousset(FR)**

(72) Inventeur: **Bonneton, Michel**
**5 Chemin du Siroux**
**F-69260 Charbonnières(FR)**
Inventeur: **Pecontaz, Patrick**
**Résidence la Dime**
**F-69770 Montrottier(FR)**

(74) Mandataire: **Maureau, Philippe et al**
**Cabinet GERMAIN & MAUREAU BP 3011**
**F-69392 Lyon Cédex 03(FR)**

(54) **Procédé et dispositif de réalisation d'un objet à partir d'une saisie tridimensionnelle de formes.**

(57) Ce procédé consiste à réaliser une saisie optique tridimensionnelle d'un sujet (7), à numériser les informations saisies, à ne retenir que les informations nécessaires à la réalisation tridimensionnelle de l'objet souhaité, à réaliser un traitement des surfaces correspondant aux différents points numérisés, à traiter ces informations à l'aide d'une formule de projection des profils pour comprimer les volumes, en vue de la création d'un relief palpable, à déterminer le trajet d'un outil d'usinage en tenant compte de la forme numérisée, des caractéristiques de l'outil, et de la forme du bloc de matériau à usiner, et enfin à commander une machine (6) d'usinage à trois dimensions.

Application à la réalisation de cameés.

FIG.1

## Procédé et dispositif de réalisation d'un objet à partir d'une saisie tridimensionnelle de formes

La présente invention a pour objet un procédé et un dispositif de réalisation d'un objet à partir d'une saisie tridimensionnelle de formes.

L'invention vise plus spécialement la réalisation d'objets destinés à la présentation d'un sujet tel qu'un visage humain ou la forme d'un animal sur des camées, médailles, médaillons, proposés sous forme de badges, porte-clés, presse-papiers, etc...

Il est usuel pour évoquer le souvenir d'un être ou d'un animal cher à une personne de réaliser une photographie de cet être ou de cet animal, afin de disposer d'une représentation de celui-ci. Cette photographie peut être placée dans un cadre qui est posé sur un support, ou qui peut être inclus dans un article tel qu'un porte-clés.

Toutefois une photographie ne constitue qu'une représentation en deux dimensions d'un sujet, et ne présente pas en elle-même un caractère esthétique très affirmé, pour les personnes n'ayant aucune affinité avec le sujet.

Il existe de longue date des représentations tridimensionnelles de sujets constituées par des camées. Un camée représente un sujet vu de côté ou de trois quart avant, de telle sorte que si le visage d'une personne est reproduit, seul soit visible un côté de ce visage, le volume obtenu étant aplati par rapport au volume réel de la partie du visage considérée.

La réalisation d'un camée doit être faite actuellement par sculpture, ce qui nécessite une intervention longue et coûteuse d'un spécialiste.

La présente invention vise à remédier à ces inconvénients en fournissant un procédé et un dispositif de réalisation d'un objet représentatif d'un sujet, permettant une réalisation automatique ne nécessitant aucune habileté particulière de la part de l'opérateur.

A cet effet, le procédé qu'elle concerne consiste à réaliser une saisie optique tridimensionnelle d'un sujet, à numériser les informations saisies, à ne retenir que les informations nécessaires à la réalisation tridimensionnelle de l'objet souhaité, à réaliser un traitement des surfaces correspondant aux différents points numérisés, à traiter ces informations à l'aide d'une formule de projection des profils pour comprimer les volumes, en vue de la création d'un relief palpable, à déterminer le trajet d'un outil d'usinage en tenant compte de la forme numérisée, des caractéristiques de l'outil, et de la forme du bloc de matériau à usiner, et enfin à commander une machine d'usinage à trois dimensions.

Ce procédé étant entièrement automatique, il n'existe aucun aléa de mise en oeuvre nécessitant un tour de main particulier de l'opérateur.

Selon un premier mode de mise en oeuvre, ce procédé consiste à réaliser une saisie de la forme du sujet à l'aide d'au moins une caméra, avec projection sur le sujet dont la saisie des formes doit être numérisée, d'au moins un méridien lumineux, chaque méridien vu par la caméra étant décomposé en un certain nombre de points élémentaires (latitude), le nombre de latitudes étant déterminé par la densité de balayage de la camera.

Les caméras utilisées peuvent être des caméras de type CCD (à transfert de charges) ou des caméras vidéo.

Les valeurs de rayons mesures sont structurées sous la forme d'un fichier séquentiel regroupant également l'ensemble des méridiens. Ainsi sur un volume, il est possible d'obtenir 360 méridiens possédant chacun 512 latitudes, soit : 360 x 512 rayons de la forme observée.

Selon un mode de mise en oeuvre, chaque caméra est déplaçable en translation et/ou en rotation par rapport au sujet dont la forme doit être saisie.

Avantageusement, ce procédé consiste à réaliser la numérisation des informations saisies par profilométrie par codage de phase, par projection sur l'objet dont la forme est à saisir d'une mire de dimensions connues, à réaliser plusieurs prises de vue selon des angles différents, et à analyser la déformation des phases pour déterminer l'altitude de tout point éclairé de l'objet.

Selon un mode de mise en oeuvre, le procédé selon l'invention consiste après numérisation des informations saisies, à réaliser un traitement de lissage permettant la suppression des points redondants et la création par interpolation des points manquants à la saisie. C'est ainsi notamment que lors de la saisie du visage d'un individu, il est difficile d'obtenir, après numerisation, une parfaite continuité au niveau des cheveux. Ceux-ci peuvent être reconstitués par remplissage de points à l'aide d'une opération dite de compensation des zones d'absences.

Ce procédé consiste ensuite à rapprocher par calcul la forme saisie et la base de matériau sur laquelle la forme saisie va être usinée. A cet effet, il est procédé à l'extraction du contour de la forme saisie et au rapprochement de ce contour vis-à-vis du contour de la base à usiner. Il est procédé à une réduction de l'échelle de la forme saisie afin que ladite forme puisse venir s'inscrire à l'intérieur du contour de la base à usiner.

A cet effet, ce procédé consiste à mettre en oeuvre un algorithme d'implantation réalisant, d'une part, l'orientation de la forme saisie et, d'autre part, la réduction de la forme saisie, afin qu'elle puisse venir s'inscrire à l'intérieur du contour de la base à usiner.

Le facteur de réduction permet de faire un suréchantillonnage de la forme numérisée, afin d'avoir toujours un nuage de points à densité de pixel constante, afin de maîtriser l'usinage, quelles que soient les dimensions de l'objet numérisé et de la base sur laquelle est effectué l'usinage.

Le logiciel de traitement assure ensuite, afin d'obtenir un effet de camée, la compression des volumes saisis, en analysant point par point la distance entre chaque point et un plan de référence et en réalisant une réduction de cette distance.

Selon un mode de mise en oeuvre, ce procédé consiste, tout d'abord, à réaliser une compression des volumes saisis pour "arrondir" la forme numérisée en supprimant les variations brutales de hauteur de la forme saisie, à reconnaître la géométrie de la forme saisie pour effectuer une nouvelle compression sélective des volumes, et enfin à réaliser un traitement des informations pour obtenir une zone de raccordement à profil doux entre le contour de la forme à usiner et la base.

Avantageusement, ce procédé consiste à réaliser une compression sélective de l'image résultant de la saisie, par découpage de l'image en surfaces unitaires à chacune desquelles est appliquée une compression d'une valeur déterminée.

Il est, en effet, intéressant de réaliser une compression différentielle afin d'accentuer certaines formes, telles que le nez d'un individu, dans le cas de la saisie de formes d'un visage humain.

Ceci permet de réduire proportionnellement le volume du camée par rapport au volume du sujet saisi.

Il est enfin procédé par analyse de la forme numérisée ainsi obtenue et après prise en compte de la forme de l'outil, au calcul de parcours optimal de l'outil d'une machine-outil à trois axes, en tenant compte de la géométrie de cet outil.

Le procédé consiste enfin à réaliser l'usinage d'une base qui peut être en résine de synthèse, ambre, ivoire, cire ou en un alliage métallique précieux ou semi-précieux, à l'aide d'une machine-outil à commande numérique qui est pilotée par un calculateur disposant des informations précitées. La base peut être constituée par exemple par un élément de forme générale cylindrique dont la face à usiner est bombée.

Il est à noter que la machine-outil possède un système de référence permettant un positionnement précis de chaque base à usiner. Dans la mesure où un matériel est équipé pour l'usinage de plusieurs types de bases, de formes et/ou de tailles différentes, il convient que l'opérateur indique, préalablement à tous calculs, quel est le type de base qui doit être usinée, afin que le calculateur puisse en tenir compte dans le traitement des informations.

De toute façon, l'invention sera bien comprise à l'aide de la description qui suit, en référence au dessin schématique annexé représentant, à titre d'exemple non limitatif, une forme d'exécution de ce dispositif :

Figure 1 est une vue en perspective des principaux éléments constitutifs de ce dispositif ;

Figures 2 et 3 sont deux vues représentatives de deux principes de saisie tridimensionnelle de la forme du sujet à reproduire ;

Figure 4 est un schéma bloc illustrant les différentes séquences du fonctionnement du dispositif ;

Figures 5 et 6 sont deux vues, respectivement, de face et de côté de deux bases dedstinées à être usinées ;

Figures 7 à 10 sont quatre vues de dessus d'autres bases destinées à être usinées.

Le dispositif, représenté au dessin, comprend un appareil 2 de saisie des formes relié, par l'intermédiaire d'un dispositif d'acquisition et de synchronisation 3 à un micro-ordinateur 4 assurant le traitement des informations, ce micro-ordinateur pilotant, par l'intermédiaire d'un dispositif électronique d'interpolation 5, une machine-outil 6 d'usinage trois axes.

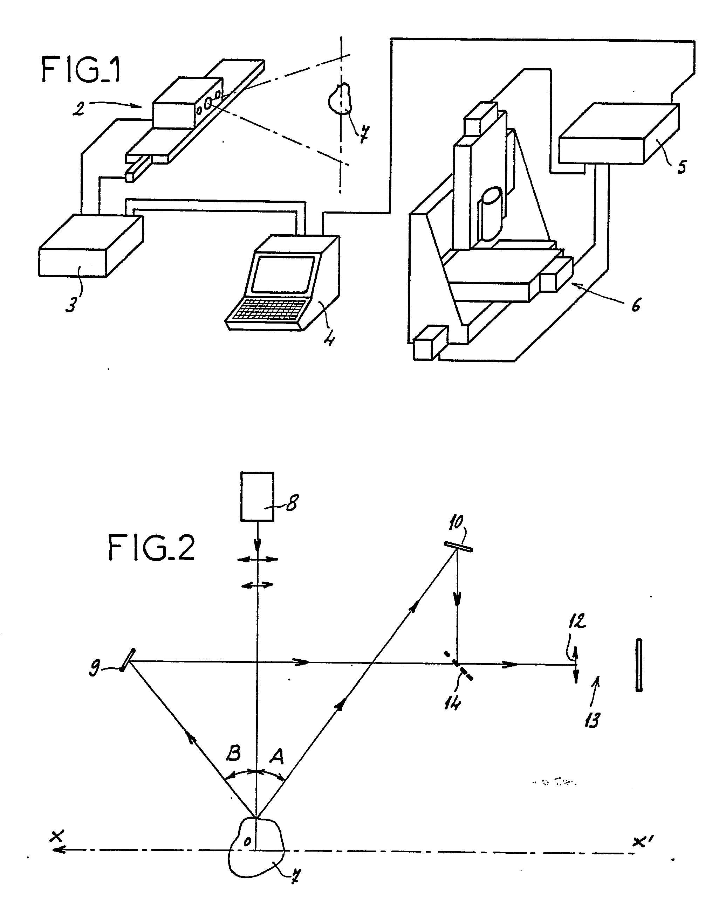

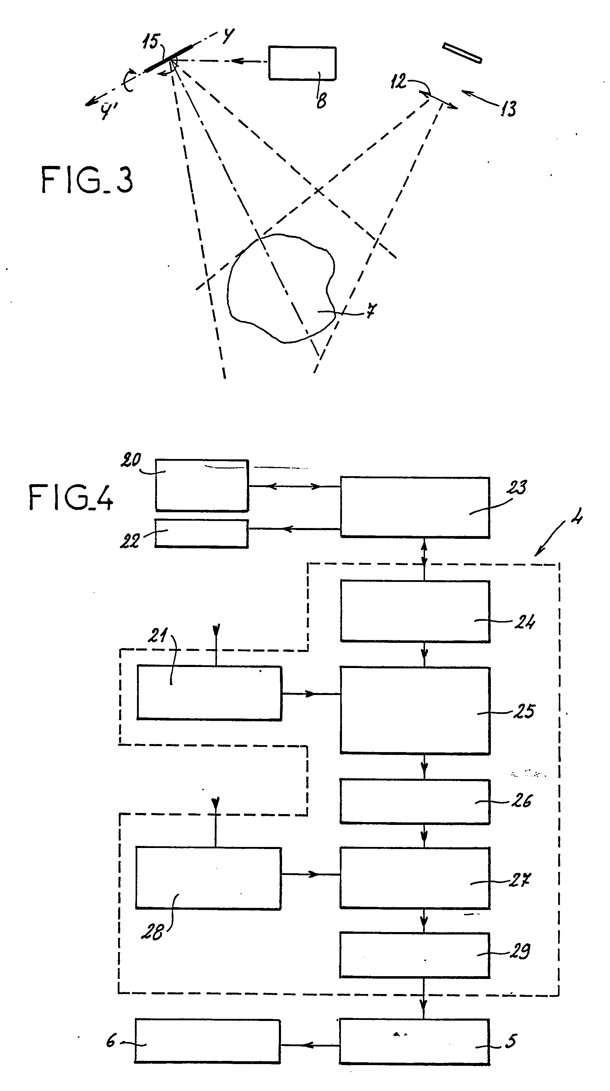

Les figures 2 et 3 représentent deux modes d'acquisition des images de l'objet ou du sujet dont la forme est à reproduire.

Dans la forme d'exécution, représentée à la figure 2, un objet 7 est disposé à une distance prédéterminée d'un dispositif d'acquisition de mesure déplaçable parallèlement à un axe $X'X$. Toute la portion de l'objet, située entre l'axe $X'X$ et le dispositif de mesure, doit être saisie.

Le dispositif de saisie comprend une source d'émission 8 d'un plan méridien lumineux éclairant l'objet 7, lequel réfléchit la lumière, d'une part, sur un miroir 9 et, d'autre part, sur un miroir 10. Le rayon réfléchi sur le miroir 9 est envoyé directement à l'objectif 12 de la caméra 13, tandis que la rayon réfléchi par le miroir 10 est envoyé à l'objectif 12 par l'intermédiaire d'un miroir semi-transparent 14.

Il est à noter que les chemins optiques 7, 9, 14 et 7, 10, 14 sont égaux et que les angles A et B sont également égaux. L'ensemble constitué par la source lumineuse 8, la caméra 13 et les miroirs 9, 10, 14, se déplace par pas parallèlement à l'axe $X'X$.

Il est ensuite possible, par triangulation, de calculer la position de chaque point et de numériser celle-ci en vue d'un traitement informatique des données.

Dans la forme d'exécution, représentée à la figure 3, l'objet 7 dont la forme est à saisir est toujours fixe, et le système d'acquisition de la forme est également fixe.

Ce système comprend, comme précédemment, une source lumineuse 8 et une camera 13 dont l'objectif 12 est représenté au dessin. Dans ce cas, la source lumineuse 8 envoie de la lumière sur un miroir 15 qui est animé de deux mouvements de rotation, d'une part, autour d'un axe $Y'Y$ et, d'autre part, autour d'un axe perpendiculaire à l'axe $Y'Y$ et passant par le centre du miroir. Lors de chaque saisie, la position du point d'impact sur l'objet est connue, ce qui permet de définir les cotes de ce point en connaissant la distance entre le miroir 15 et la caméra 13, ainsi que l'angle que forment ces éléments.

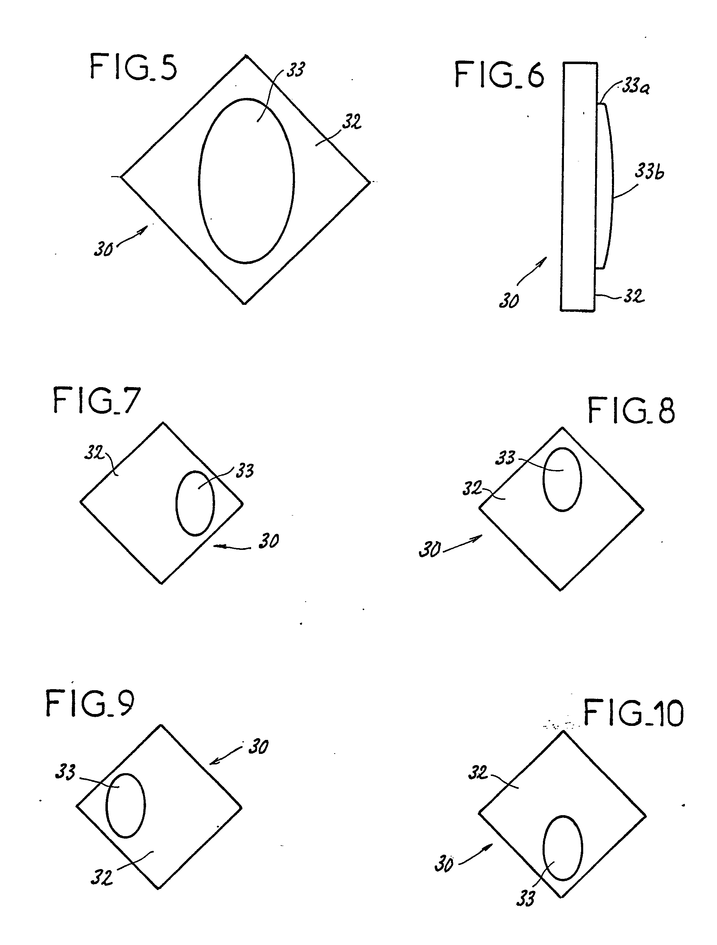

La figure 4 représente un schéma synoptique du traitement.

Le dispositif d'éclairage et d'acquisition 20 ainsi que le dispositif 22 assurant le déplacement de tout ou partie du dispositif d'acquisition, sont commandés par un système de synchronisation 23 qui assure également le transfert des informations vers un micro-ordinateur 4 représenté en traits discontinus.

Au niveau de ce micro-ordinateur sont effectuées les opérations suivantes :

- 24 : triangulation, correction des mesures et lissage,

- 25 : extraction du contour, calcul d'échelle et de positionnement sur la base, après que l'opérateur ait indiqué en 21 quelle base il choisissait pour l'usinage,

- 26 : opération de compression sélective,

- 27 : calcul des trajectoires d'usinage en tenant compte de la nature de la base à usiner et de la géométrie de l'outil, ce dernier pouvant être, éventuellement, sélectionné par l'opérateur en fournissant une information en 28,

- 29 : transfert au format "programme d'usinage".

Le micro-ordinateur pilote, par l'intermédiaire d'un bloc électronique d'interpolation 5, la machine-outil 6 d'usinage à trois dimensions, sur le support de laquelle l'opérateur aura fixé une base à un emplacement prédéterminé, sans risque d'erreur.

Les figures 5 à 10 représentent plusieurs formes de bases.

La base 30, représentée à la figure 5, comprend un socle 32 sur lequel est montée la partie usinable 33 qui est réalisée dans le même matériau que le socle ou dans un matériau différent.

Comme montré au dessin, la partie usinable 33 présente, en vue de dessus, une forme générale ovale et est orientée suivant une diagonale du socle 32 qui est, pour sa part, de forme carrée. La partie usinable 33 comprend une zone inférieure 33a perpendiculaire au plan du socle 32 et une zone supérieure 33b bombée vers l'extérieur.

Les figures 7 à 10 représentent quatre variantes d'exécution de cette base 30 dans lesquelles, la partie usinable est de surface relativement plus faible qu'aux figures 5 et 6, et dans laquelle la partie usinable est excentrée par rapport au socle 32.

Ce dispositif permet à un opérateur non initié de réaliser simplement et rapidement la reproduction tri-dimensionnelle sous forme d'un camée ou similaire d'un objet ou d'un sujet. Les opérations permettant l'obtention de ce camée sont entièrement automatiques, les seules informations que doit fournir l'opérateur consistant dans le choix de la base qui servira à l'usinage. Il lui faut également monter sur le socle de la machine-outil la base correspondante en vue de son usinage.

L'appareil peut soit réaliser les différentes phases depuis la saisie des formes jusqu'à l'usinage, soit être constitué de deux sous-ensembles dont le premier assure la saisie de forme, la numérisation des informations et leur stockage sur un support, et dont le second assure le traitement des informations et l'usinage. Il est ainsi possible de ne disposer que d'un seul centre de traitement et d'usinage pour plusieurs appareils de saisie.

Comme il va de soi, l'invention ne se limite pas à la seule forme d'exécution de ce procédé, ni au seul dispositif pour sa mise en oeuvre, décrits ci-dessus à titre d'exemples ; elle en embrasse, au contraire, toutes les variantes.

C'est ainsi notamment que le procédé de saisie tridimensionnelle des formes pourrait être différent de ceux indiqués ci-dessus ou encore que la forme et/ou la nature des bases pourrait être différente sans que l'on sorte pour autant du cadre de l'invention.

## Revendications

1. - Procédé de réalisation d'un objet à partir d'une saisie tridimensionnelle de formes, caractérisé en ce qu'il consiste à réaliser une saisie optique tridimensionnelle d'un sujet (7), à numériser les informations saisies, à ne retenir que les informations nécessaires à la réalisation tridimensionnelle de l'objet souhaité, à réaliser un traitement des surfaces correspondant aux différents points numérisés, à traiter ces informations à l'aide d'une formule de projection des profils pour comprimer les volumes, en vue de la création d'un relief palpable, à déterminer le trajet d'un outil d'usinage en tenant compte de la forme numérisée, des caractéristiques de l'outil, et de la forme du bloc de matériau à usiner, et enfin à commander une machine (6) d'usinage à trois dimensions.

2. - Procédé selon la revendication I, caractérisé en ce qu'il consiste à réaliser la numérisation des informations saisies par profilométrie par codage de phase, par projection sur l'objet dont la forme est à saisir d'une mire de dimensions connues, et dont la phase varie selon une fonction connue, à réaliser plusieurs prises de vue selon des angles différents, et à analyser la déformation des phases pour déterminer l'altitude de tout point éclairé de l'objet.

3. - Procédé selon l'une quelconque des revendications 1 et 2, caractérisé en ce qu'il consiste à rapprocher, par calcul, la forme saisie et la base de matériau sur laquelle cette forme doit être usinée, par extraction du contour de la forme et rapprochement vis-à-vis du contour de la base à usiner.

4. - Procédé selon la revendication 3, caractérisé en ce qu'il consiste à mettre en oeuvre un algorithme d'implantation réalisant, d'une part, l'orientation de la forme saisie et, d'autre part, la réduction de la forme saisie, afin qu'elle puisse venir s'inscrire à l'intérieur du contour de la base à usiner.

5. - Procédé selon l'une quelconque des revendications 3 et 4, caractérisé en ce qu'il consiste à réaliser la compression des volumes saisis en analysant point par point la distance entre chaque point et un plan de référence et en réalisant une réduction de cette distance.

6. - Procédé selon la revendication 5, caracterisé en ce qu'il consiste tout d'abord à réaliser une compression des volumes saisis pour "arrondir" la forme numérisée en supprimant les variations brutales de hauteur de la forme saisie, à reconnaître la géométrie de la forme saisie pour effectuer une nouvelle compression sélective des volumes, et enfin à réaliser un traitement des informations pour obtenir une zone de raccordement à profil doux entre le contour de la forme à usineret la base.

7. - Procédé selon l'une quelconque des revendications 5 et 6, caractérisé en ce qu'il consiste à réaliser une compression sélective de l'image résultant de la saisie, par découpage de l'image en surfaces unitaires à chacune desquelles est appliquée une compression d'une valeur déterminée.

8. - Dispositif pour la mise en oeuvre du procédé selon l'ensemble des revendications 1 à 7, caractérisé en ce qu'il comprend un système d'acquisition tridimensionnelle des formes (2) relié par un bloc de commande d'acquisition et de synchronisation (3) à un calculateur (4) assurant la numerisation des formes saisies, la correction des mesures, le lissage, l'extraction du contour, son rapprochement de la base à usiner, la compression des volumes, puis le calcul des trajectoires de l'outil, le calculateur commandant, par l'intezrmédiaire d'un bloc d'interpolation (5) une machine d'usinage (6) à trois axes.

FIG.1

FIG.2

FIG.3

FIG.4

FIG.5

33

32

30

FIG.6

33a

33b

30

32

FIG.7

32

33

30

FIG.8

33

32

30

FIG.9

30

33

32

32

FIG.10

32

30

33